Europäisches Patentamt

(19) European Patent Office

Office européen des brevets

(11) Numéro de publication: **0 105 816**
**B1**

(12) **FASCICULE DE BREVET EUROPEEN**

(51) Int. Cl.⁴: **H 02 H 1/04,** H 02 H 3/14, H 01 H 79/00

(45) Date de publication du fascicule du brevet:
**24.06.87**

(21) Numéro de dépôt: **83420156.8**

(22) Date de dépôt: **28.09.83**

---

(54) Appareil de mise à la masse automatique de structures accidentellement sous tension.

---

(30) Priorité: **30.09.82 FR 8216708**

(43) Date de publication de la demande:
**18.04.84 Bulletin 84/16**

(45) Mention de la délivrance du brevet:
**24.06.87 Bulletin 87/26**

(84) Etats contractants désignés:
**BE CH DE GB IT LI SE**

(56) Documents cités:
**EP - A - 0 064 016**
**DE - C - 755 291**
**DE - C - 926 798**
**FR - A - 1 096 498**
**FR - A - 1 256 378**
**FR - A - 1 514 214**
**FR - E - 68 395**
**US - A - 3 218 424**

**ELECTRONICS, vol. 48, no. 10, 15 mai 1975, pages 99-101, New York, US T.E. SKOPAL: "How to prevent spurious tripping of protection circuits"**

(73) Titulaire: **FERRAZ Société Anonyme, 28 Rue Saint Philippe, F-69003 Lyon (FR)**

(72) Inventeur: **Gazzola, Christian, 271, Rue Paul Bert, F-69003 Lyon (FR)**

(74) Mandataire: **Monnier, Joseph et al, Cabinet Monnier 142-150, Cours Lafayette B.P. 3058, F-69393 Lyon Cédex 03 (FR)**

---

ACTORUM AG

**Description**

On sait que pour éviter les accidents résultant d'une mise sous tension accidentelle d'une structure métallique, l'on peut associer à celle-ci un appareil qui la relie alors automatiquement à une masse ou terre parfaitement établie.

On sait également qu'en vue d'éviter tout risque d'électrocution pendant le temps très court, mais non négligeable, qui s'écoule entre l'apparition de la tension et l'instant où l'appareil a réalisé la mise à la terre, on peut avantageusement disposer entre cette terre et la structure un éclateur réglé pour une tension modérée (par exemple 90 volts) qui puisse être supportée sans danger pendant le temps précité.

En ce qui concerne l'état de la technique, on citera les documents suivants:

1 – DE-C-926 798 (SIEMENS-SCHUKERT-WERKE) qui décrit un agencement de contacts comprenant plusieurs contacts mobiles travaillant en parallèle et présentant des modes de vibration différents entre eux afin d'éviter un éventuel rebondissement simultané desdits contacts, lequel agencement est particulièrement avantageux lorsqu'on désire obtenir une fermeture très rapide et précise des contacts.

2 – US-A-3 218 424 (SALERNO) qui est relatif à un interrupteur comportant plusieurs contacts mobiles élastiques dont chacun est constitué par une barrette pourvue de plots et sollicitée par une lame de ressort, ces contacts présentant des modes de vibration différents entre eux.

3 – FR-A-1 256 378 (SIEMENS SCHUKERT-WERKE) qui montre un appareil court-circuiteur comprenant des contacts fixes associés à un contact mobile qui est porté par une tige et qui est sollicité par un ressort, laquelle tige est solidaire d'une pièce présentant une surface inclinée coopérant avec un cliquet pour maintenir les contacts ouverts de sorte que la fermeture des contacts implique le déplacement du cliquet précité en vue de la libération de ladite tige.

4 – DE-C-755 291 (SIEMENS-SCHUKERT-WERKE) qui a pour objet un appareil pour la mise à la terre automatique d'une structure métallique accidentellement sous tension, lequel appareil comprend deux détecteurs aptes à commander un électro-aimant qui assure la fermeture d'un interrupteur interposé entre la structure et la terre, ces dernières étant en outre connectées à travers un éclateur.

L'invention vise à permettre d'établir un appareil du genre en question qui présente un fonctionnement particulièrement sûr tout en état de construction simplifiée.

L'appareil suivant l'invention est défini par la revendication 1 du jeu de revendications annexé.

Le dessin annexé, donné à titre d'exemple, permettra de mieux comprendre l'invention, les caractéristiques qu'elle présente et les avantages qu'elle est susceptible de procurer:

Fig. 1 est une vue de face de l'appareil, l'une des moitiés du boîtier étant enlevée pour permettre d'apercevoir l'agencement intérieur.

Fig. 2 est une coupe suivant II–II (fig. 1), cette vue indiquant en I–I le plan de joint qu'on peut considérer comme plan de coupe pour fig. 1.

Fig. 3 montre le schéma électrique.

Fig. 4 et 5 sont des vues de détail respectivement semblables à celles de fig. 1 et 2, mais montrant les pièces à une autre position en ce qui concerne le déclenchement et le ré-enclenchement.

Fig. 6 représente une variante de schéma électrique assurant un seuil de déclenchement fonction de la popularité de la tension appliquée à la structure.

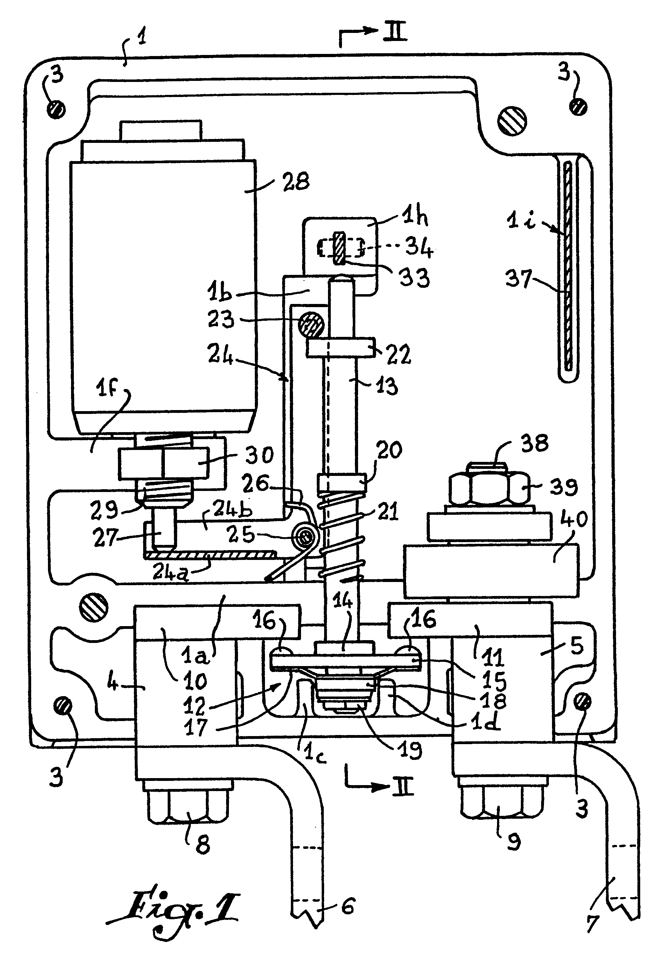

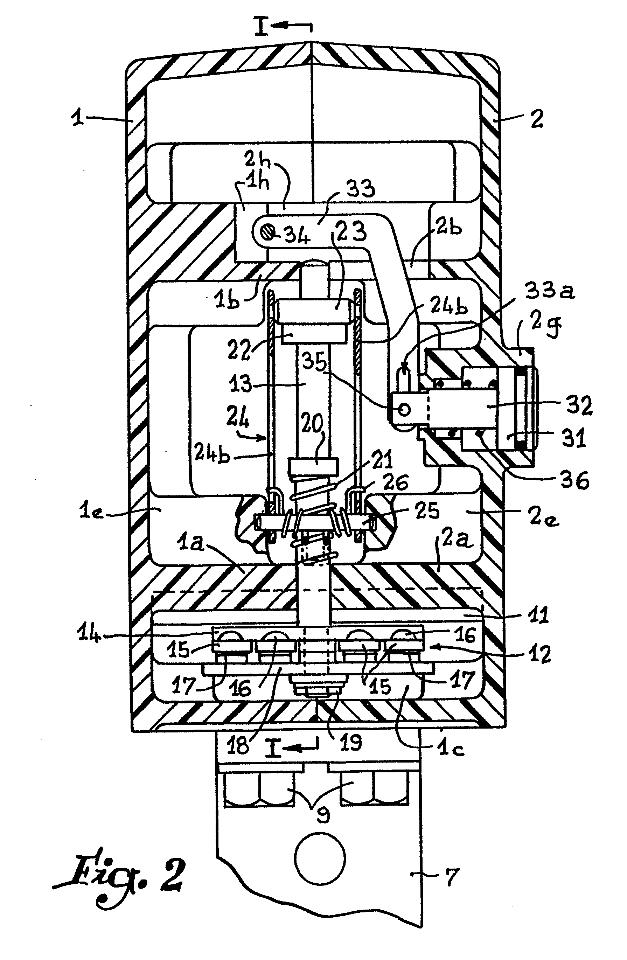

L'appareil représenté comprend un boîtier fait en deux moitiés 1 et 2 assemblées par des tirants tels que 3. Ces deux moitiés sont réalisées en matière isolante moulée de façon à présenter les conformations voulues pour emprisonner entre elles des composants intérieurs. Leur plan de joint a été référencé I–I en fig. 2 parce qu'il correspond au plan de coupe de fig. 1.

Dans le bas du boîtier ainsi établi sont disposées deux bornes 4 et 5 à forte section qui se prolongent vers l'extérieur pour recevoir les deux conducteurs plats 6 et 7 respectivement reliés à la structure intéressée et à la terre, le serrage de ceux-ci étant aussuré par des vis 8 et 9. Chacun de ces bornes porte à l'intérieur du boîtier un contact fixe, respectivement 10 et 11, ces deux contacts étant disposés en face l'un de l'autre de façon à pouvoir être reliés électriquement par un système de contact mobile 12 à éléments multiples qu'on décrira plus loin.

Entre les deux contacts fixes 10 et 11 est montée une tige verticale mobile 13 qui coulisse dans des empreintes cylindriques ménagées entre des nervures en vis-à-vis du boîtier, savoir d'une part 1a et 2a (fig. 2), d'autre part 1b et 2b, cette dernière étant fendue comme on le verra ci-après. La tige 13 porte dans le bas une traverse 14 contre la face inférieure de laquelle viennent porter quatre contacts mobiles élémentaires 15 réalisés sous la forme de barrettes plates portant en bout des plots 16 propres à coopérer avec les contacts fixes 10 et 11 lors du soulèvement de la tige. Ces contacts mobiles ou barrettes sont disposés deux par deux symétriquement de part et d'autre de la tige, comme montré fig. 2. Ils sont sollicités en direction du haut par des lames de ressort 17, lesquelles sont fixées par leur milieu sur une seconde traverse 18 portée par l'extrémité inférieure de la tige 13 et serrée contre un épaulement de celle-ci par un écrou 19. Bien entendu des moyens appropriés sont prévus pour empêcher les traverses 14 et 18 de tourner autour de l'axe de la tige 13 ainsi que pour maintenir les barrettes 15 perpendiculaires à ces traverses. Le boîtier peut comporter à cet effet des nervures venant entourer les traverses avec jeu suffisant, telles par exemple que celles référencées 1c et 1d. Quant aux barrettes, on peut prévoir sur leur face inférieure des pions coulissant dans des fentes des lames élastiques, ou bien les engager en partie dans des rainures de guidage creusées dans la face inférieure de la traverse 14.

Les lames 17, les plots 16 et les barrettes correspondantes sont agencés de façon à comporter des caractéristiques vibratoires différentes.

La tige 13 porte au-dessus des nervures 1a, 2a une première bague 20 contre laquelle vient agir un ressort de compression 21 prenant appui sur les nervures précitées. Au-dessus de cette bague 20 il en est prévu une autre 22 qui vient normalement buter contre un galet 23 porté par la branche verticale d'un levier en équerre 24 articulé sur un axe inférieur 25 dont les extrémités sont engagées dans des perforations borgnes pratiquées dans des nervures 1e, 2e du boîtier 1–2. Un ressort de torsion 26 sollicite le levier 24 à tourner dans le sens correspondant à l'engagement du galet 23 sur la rondelle 22.

Comme montré, le levier 24 est fait à partir d'une tôle comportant une partie centrale 24a qui constitue voile pour le bras horizontal du levier, et deux parties latérales 24b à profil en L repliées de part et d'autre de la précédente en vue de réaliser le bras vertical, le galet 23 se terminant par deux pivots qui tournent dans des perforations des extrémités desdites parties latérales 24b.

Sur le voile 24b du levier 24 se repose une pointe arrondie 27 solidaire du noyau mobile d'une bobine ou électro-aimant 28, cette bobine étant établie de façon que lorsqu'elle est excitée la pointe 27 s'abaisse. De tels électro-aimants étant bien connus dans la pratique on ne décrira pas davantage l'agencement intérieur de ce noyau mobile et du noyau fixe correspondant que traverse la tige en métal non magnétique dont la pointe 27 est solidaire. On notera seulement que le noyau fixe inférieur se prolonge vers le bas par une partie filetée 29 sur laquelle est montée une couronne 30 maintenue dans une creusure prévue dans deux nervures du boîtier et dont seul celle 1f de la moitié 1 est visible en fig. 1, lesdites nervures étant librement traversées par la partie filetée 29. On comprend que cette disposition permet de régler la hauteur de la bobine 28 par rapport au voile 24a de la branche horizontale du levier 24.

La moitié 2 du boîtier comporte une partie 2g en forme de douille s'ouvrant vers l'extérieur et dans laquelle peut coulisser un bouton-poussoir 31 solidaire d'une courte tige 32 qui traverse le fond de cette douille pour venir s'articuler à l'extrémité d'un levier coudé 33 articulé sur un axe 34 serré entre des bossages 1h et 2h respectivement solidaires des deux moitiés 1 et 2. On notera que la fente précitée de la nervure 2b sert précisément au passage du levier 33. Comme montré l'articulation de la tige 32 au levier 33 s'effectue par l'intermédiaire d'une fente 33a de longueur notable poinçonnée dans ce dernier et d'un axe 35 traversant celle-ci. Un ressort 36 est monté sur la tige 32 à l'intérieur de la douille 2g pour assurer le rappel du bouton vers l'extérieur. Comme montré, la partie du levier 33 voisine de l'axe 34 est substantiellement horizontale à sa position de repos et elle passe à une faible distance au-dessus de l'extrémité supérieure de la tige 13 quand cette dernière se trouve à sa position basse déterminée par la retenue de la bague 22 par le galet 23.

Les deux moitiés 1 et 2 comportent à leur intérieur une fente telle que 1i (fig. 1), l'ensemble de ces deux fentes disposées en vis-à-vis pouvant recevoir une plaquette 37 de circuit imprimé ou intégré.

Enfin la borne 5 se prolonge vers le haut pour porter une tige filetée 38 sur laquelle un écrou 39 permet de serrer un thyristor annulaire 40.

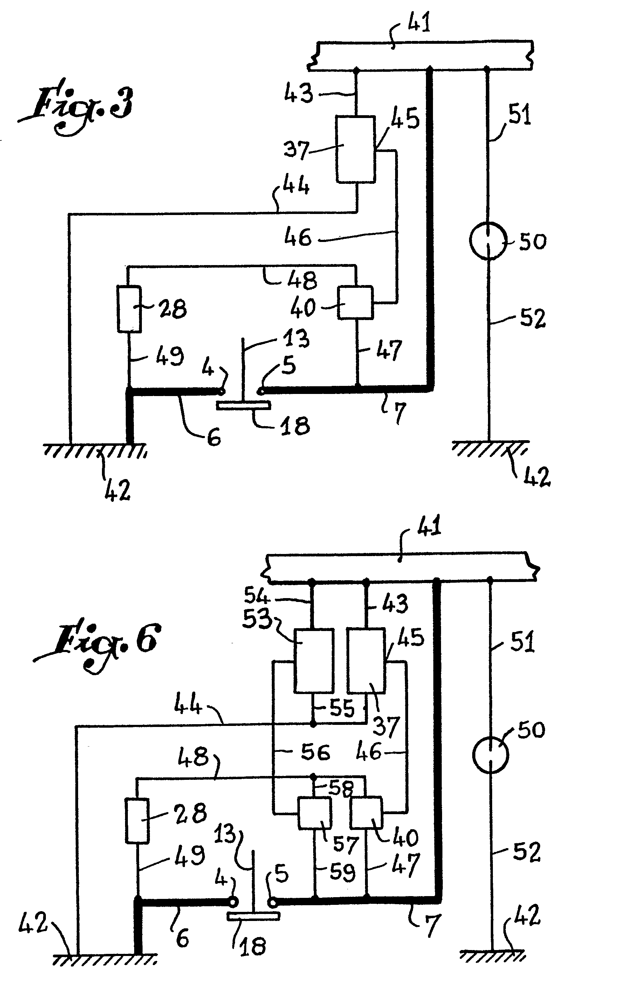

Fig. 3 montre le schéma électrique général de l'appareil. La référence 41 y désigne la structure métallique à protéger contre les surtensions. Le conducteur à forte section 7 la relie à la borne 5 tandis que la borne 4 est reliée à la terre 42 par un conducteur 6 de section semblable. Le circuit 37 est branché entre la structure 41 et la terre 42 par des conducteurs 43, 44. Il comporte une sortie 45 reliée par un conducteur 46 à la gâchette du thyristor 40, lequel est autrement monté dans un circuit comprenant un conducteur 47 relié au conducteur 7 précité, un autre conducteur 48 aboutissant à la bobine 28 et enfin un conducteur 49 reliant la sortie de celle-ci à la terre 42 (par l'intermédiaire du conducteur 6).

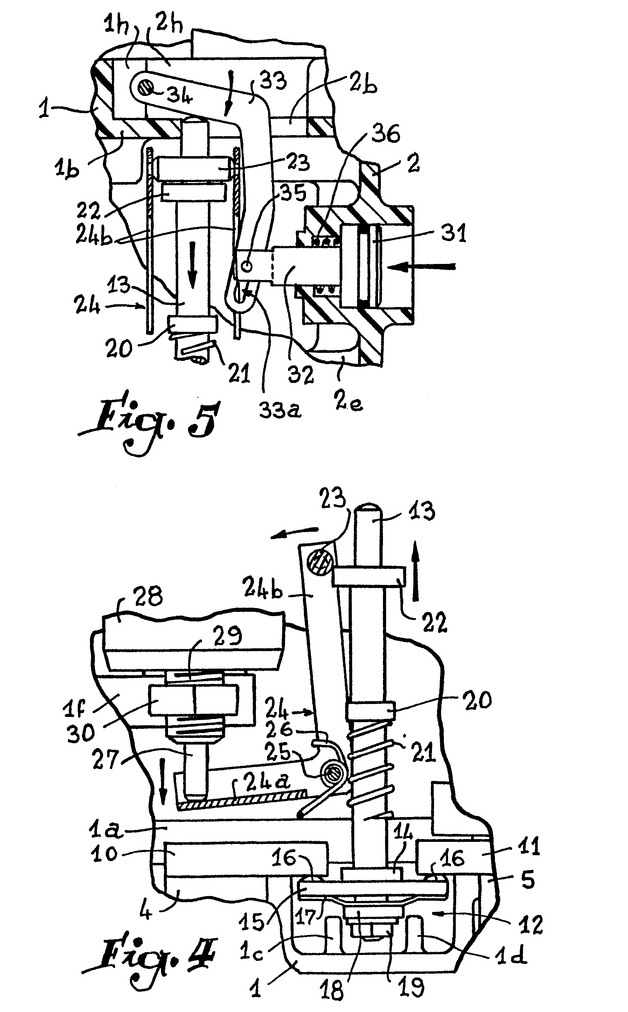

En conditions normales la tige 13 est maintenue à la position abaissée à l'encontre du ressort 21 par le galet 23 disposé au-dessus de la bague 22. Le circuit est ouvert entre les contacts 10 et 11. Si le circuit détecteur 37 décèle l'apparition d'une tension dangereuse sur la structure 41, il déclenche le thyristor 40 et celui-ci relie la bobine 28 au conducteur 7, c'est-à-dire à la structure 41 alors sous tension. La bobine ainsi alimentée en courant fonctionne en électro-aimant, son noyau mobile s'abaisse et la pointe 27 fait basculer le levier 24 dans le sens sinistrorsum en fig. 1, de sorte que le galet 23 dégage la bague 22. La tige 13 ainsi libérée se soulève et les plots 16 viennent s'appliquer contre les contacts fixes 10 et 11 (position de fig. 4) en reliant positivement la structure à la terre et en faisant ainsi disparaître la surtension, quitte à provoquer le fonctionnement d'un disjoncteur s'il apparaît alors une surintensité sur le réseau intéressé. Grâce aux caractéristiques vibratoires différentes des contacts élastiques de l'interrupteur, il ne peut se produire aucun phénomène de rebondissement simultané susceptible de provoquer une coupure du circuit, si courte soit elle.

Lorsque la cause de l'incident a disparu ou a été éliminée, pour ré-armer l'appareil il suffit d'appuyer sur le bouton 31 (fig. 5). On fait ainsi tourner le levier 33 dans le sens dextrorsum en fig. 2 et 5. Sa partie supérieure s'abaisse et entraîne la tige en direction du bas à l'encontre du ressort 21. La bobine 28 n'étant plus alimentée, le ressort 26 ramène le galet 23 sur la bague 22, de sorte qu'on revient à la position initiale de fig. 1.

Comme sus-indiqué, l'on prévoit la bobine 28 et son circuit magnétique de manière qu'ils comportent une faible impédance et qu'il faille une intensité relativement forte pour assurer le déclenchement. On évite ainsi des déclenchements intempestifs sous l'effet de tensions transitoires qui se trouvent mises à la terre sans agir sur le mécanisme. En outre lors du déclenchement la bobine ainsi établie dérive une fraction importante du courant de surtension.

Dans le schéma électrique de fig. 3 on a indiqué en 50 l'éclateur qu'on prévoit souvent en parallèle entre la structure et la terre (conducteurs 51 et 52) pour limiter la surtension pendant le temps très court nécessaire au déclenchement de l'appareil. Cet éclateur, préférablement établi à l'intérieur d'une ampoule renfermant un gaz approprié (néon par exemple), ne doit bien entendu pas gêner le fonctionnement de l'interrupteur. On prévoit donc la bobine 28 de façon telle qu'elle puisse assurer le déclenchement sous une tension maximale à ses bornes inférieure à celle de fonctionnement de l'éclateur, par exemple sous 50 volts (tension L.di/dt) pour un éclateur au néon.

Dans la variante de fig. 6 on a supposé que la tension intempestive susceptible d'apparaître entre la structure 41 et la terre pouvait être soit positive, soit négative et qu'on désirait disposer de seuils de déclenchement différents suivant les cas.

On retrouve ici le circuit détecteur 37 de commande du thyristor 40; toutefois ce détecteur est polarisé en ce sens qu'il ne répond que pour une polarité de la surtension éventuelle, par exemple si celle-ci rend la structure positive par rapport au sol, et n'intervient pas dans le cas contraire. Mais on a prévu un second détecteur 53 relié à la structure par un conducteur 54 et au conducteur 44 précité par un autre conducteur 55. Ce second détecteur est ainsi en parallèle avec le premier, mais il est polarisé en sens inverse pour répondre à une surtension négative. Il commande à travers un conducteur 56 un thyristor ou triac 57 convenablement branché entre les conducteurs 48 et 7 par des conducteurs de liaison 58 et 59. On comprend aisément que suivant le sens de la tension qui apparaît entre la structure et la terre, c'est l'un ou l'autre des deux détecteurs 37 et 53 qui répond et que ceux-ci peuvent être réglés pour des seuils de fonctionnement différents, si on le désire.

On peut encore prévoir en certains cas de disposer des interrupteurs sur des conducteurs 46 et 56, par exemple, pour permettre de ne fonctionner que pour un sens de la tension à éliminer.

## Revendications

1. Appareil pour la mise à la masse automatique de structures métalliques accidentellement sous tension, du genre comprenant au moins un détecteur (37, 53) qui commande un électro-aimant (28) propre à assurer la fermeture d'un interrupteur (10–11–12) qui est interposé entre la structure (41) et la terre (42) et qui comporte plusieurs contacts mobiles élastiques (15–16–17) portés par un tige (13) qu'un ressort (21) sollicite vers les contacts fixes (10–11) correspondants, tandis qu'il est prévu un système de retenue de ladite tige susceptible de libérer celle-ci sous l'effet de l'électro-aimant, ce système comprenant une saillie solidaire de la tige porte-contacts (13) et une butée effaçable portée par un levier basculant commandé par l'électro-aimant (28) et propre à venir coopérer avec ladite saillie, caractérisé en ce que les contacts mobiles élastiques (15–16–17) présentent des modes de vibration différents entre eux afin d'éviter tout retard de fonctionnement dû à un éventuel rebondissement simultané desdits contacts, et en ce que la saillie est constituée par une bague (22) solidaire de la tige porte-contacts (13), tandis que le levier (24) qui porte la butée (23) est en forme de L avec une première branche qui s'étend à peu près parallèlement à la tige (13) et une seconde sur laquelle vient agir une pointe axiale (27) solidaire du noyau mobile de l'électro-aimant (28).

2. Appareil suivant la revendication 1, caractérisé en ce que la butée (23) portée par le levier (24) est établie sous la forme d'un galet.

3. Appareil suivant l'une quelconque des revendications 1 et 2, du genre comprenant un boîtier en deux moitiés moulées (1–2), caractérisé en ce que le noyau fixe de l'électro-aimant (28) se prolonge par une partie filetée (29) qui traverse suivant le plan de joint (I–I) des deux moitiés (1, 2) du boîtier une nervure (1f) de celui-ci, cette nervure entourant un écrou (30) vissé sur ladite partie filetée (29) de manière à permettre le réglage du déclenchement par simple rotation de cet électro-aimant (28).

4. Appareil suivant l'une quelconque des revendications 1 à 3, caractérisé en ce que la pointe axiale (27) de l'électro-aimant (28) agit sur le voile central (24a) du levier (24), lequel est établi par repliage de deux branches en L de part et d'autre de ce voile.

5. Appareil suivant l'une quelconque des revendications 1 à 4, du genre pourvu d'un mécanisme de ré-enclenchement à bouton-poussoir, caractérisé en ce que ce mécanisme comprend un levier coudé (33) comportant une partie substantiellement perpendiculaire à l'axe de la tige porte-contacts (13), cette partie étant prolongée par une autre orientée substantiellement à 90° de la précédente et sur l'extremité de laquelle le bouton-poussoir (32) vient agir par l'intermédiaire d'une liaison appropriée (33a–35).

6. Appareil suivant l'une quelconque des revendications 3 ou 4, 5 en tant que dépendantes de 3, caractérisé en ce que la tige porte-contacts (13) est disposée dans le plan de joint (I–I) des deux moitiés (1, 2) du boîtier et est guidée dans des empreintes creusée dans des nervures en vis-à-vis (1a–2a; 1b–2b) de celles-ci.

## Claims

1. Apparatus for the automatic earthing of metallic structures which are accidentally charged, of the type comprising at least one detector (37, 53) which controls an electro-magnet (28) which ensures the closure of a switch (10–11–12) interposed between the structure (41) and the earth (42) and which comprises several movable elastic contacts (15–15–17) carried by a rod (13) which a spring (21) urges towards the corresponding fixed contacts (10–11), whilst a system is provided for the retention of the said rod, which is capable of freeing the latter under the effect of the electro-magnet, this system comprising a projection which is integral with the contact-carrier rod (13) and a stop, which is able to be drawn aside, and is carried by a rocking lever which is controlled by the electro-magnet (28) and which is able to come into cooperation with the said projection, characterised in that the movable elastic contacts (15, 16, 17) have different modes of vibration with respect to each other, so as to avoid any delay in functioning due to a possible simultaneous rebounding of the said contacts, and in that the projection is constituted by a ring (22) which is integral with the contact-carrier rod (13), whilst the lever (24) which carries the stop (23) is L-shaped with a first branch which extends approximately parallel to the rod (13) and a second branch on which an axial point (27) comes to act, which is integral with the movable core of the electro-magnet (28).

2. Apparatus according to claim 1, characterised in that the stop (23) carried by the lever (24) is constructed in the form of a roller.

3. Apparatus according to any one of claims 1 and 2, of the type comprising a case in two moulded halves (1–2), characterised in that the fixed core of the electro-magnet (28) is extended by a threaded part (29) which following the joint plane (I–I) of the two halves (1, 2) of the case passes through a rib (1f) of the latter, this rib surrounding a nut (30) which is screwed on the said threaded part (29) so as to allow the regulation of the disengagement by simple rotation of the electro-magnet (28).

4. Apparatus according to any one of claims 1 to 3, characterised in that the axial point (27) of the electro-magnet (28) acts on the central bend (24a) of the lever (24) which is formed by turning back two branches in an L-shape on either side of this bend.

5. Apparatus according to any one of claims 1 to 4, of the type provided with a push-button reengagement mechanism, characterised in that this mechanism comprises a bent lever (33) having a part substantially perpendicular to the axis of the contact-carrier rod (13), this part being extended by another part oriented substantially at 90° to the former and on the end of which the push-button (32) comes to act by means of a suitable connection (33a–35).

6. Apparatus according to any one of claims 3, or claims 4 or 5 as dependent on claim 3, characterised in that the contact-carrier rod (13) is arranged in the joint plane (I–I) of the two halves (1, 2) of the case and is guided in hollowed impressions, in ribs, opposite (1a–2a; 1b–2b) the latter.

**Patentansprüche**

1. Vorrichtung zum automatischen Erden zufällig unter Spannung stehender metallischer Strukturen mit mindestens einem Detektor (37, 53), der einen Elektromagneten (28) steuert zum sicheren Schliessen eines zwischen Struktur und Erde geschalteten Unterbrechers (10–11–12) mit einer Kontaktstange (13), an der mehrere bewegbare federnde Kontakte (15–16–17) angeordnet sind, die mit Hilfe einer Feder gegen korrespondierende Festkontakte angedrückt sind, wobei die Kontaktstange mit einer von einem Elektromagneten (28) auslösbaren Sperre versehen ist, die von einem mit der Kontaktstange (13) kraftschlüssig verbundenen Vorsprung in Zusammenwirken mit einer Raste an einem von dem Elektromagneten (28) betätigbaren Hebel gebildet ist, dadurch gekennzeichnet, dass die bewegbaren federnden Kontakte (15–16–17) unterschiedliche Schwingungsmoden aufweisen, um Funktionsverzögerungen durch gleichzeitiges Prellen der Kontakte aus dem Weg zu gehen, sowie dadurch, dass der Vorsprung gebildet ist durch einen kraftschlüssig mit der Kontaktstange verbundenen Ring (22) und dass der mit der Raste (23) versehene Hebel (24) als L-förmiger Kipphebel (24) ausgebildet ist, dessen erster Schenkel sich etwa parallel zur Kontaktstange (13) erstreckt und auf dessen zweiten Schenkel ein axialer Stössel (27), der mit dem beweglichen Anker des Elektromagneten verbunden ist, einwirkt.

2. Vorrichtung nach Anspruch 1, dadurch gekennzeichnet, dass die durch den Kipphebel (24) getragene Raste als Rolle ausgebildet ist.

3. Vorrichtung nach einem der Ansprüche 1 oder 2, mit einem aus zwei Formhälften (1–2) gebildeten Gehäuse, dadurch gekennzeichnet, dass der feste Anker des Elektromagneten (28) verlängert ist durch ein Gewindestück (29), das entsprechend dem Schnitt (I–I) der beiden Hälften (1–2) des Gehäuses eine Rippe (1f) durchdringt und mit einer auf das Gewindestück aufgeschraubten Mutter befestigt ist, so dass eine Einstellung des Auslösepunktes durch einfache Drehung des Elektromagneten möglich ist.

4. Vorrichtung nach einem der Ansprüche 1 bis 3, dadurch gekennzeichnet, dass der axiale Stössel (27) des Elektromagneten (28) auf einen mittigen Schenkel (voile centrale) (24a) des Hebels (24) einwirkt, der gebildet ist durch Abkantung der zwei L-förmigen Arme beidseits dieses Schenkels (voile).

5. Vorrichtung nach einem der Ansprüche 1 bis 4 mit einer Einrichtung zum Wiedereinschalten mittels einer Drucktaste, dadurch gekennzeichnet, dass die Wiedereinschalteinrichtung einen gekrümmten Hebel (33) aufweist mit einem zur Achse der Kontaktstange (13) im wesentlichen rechtwinklig ausgerichteten Hebelarm, der mit einer im wesentlichen im Winkel von 90° zum Hebelarm verlaufenden Verlängerung versehen ist, auf deren äusseres Ende die Drucktaste (32) über geeignete Verbindungsmittel einwirkt.

6. Vorrichtung nach Anspruch 3 oder einem der Ansprüche 4 oder 5 soweit von Anspruch 3 abhängig, dadurch gekennzeichnet, dass die Kontaktstange (13) in der Schnittebene (I–I) der beiden Gehäusehälften (1, 2) angeordnet und in einander gegenüberliegenden Ausnehmungen der Rippen (1a–2a; 1b–1b) geführt ist.

Fig.1

*Fig. 2*

Fig. 3

Fig. 6

**Fig. 5**

**Fig. 4**